Europäisches Patentamt

European Patent Office

Office européen des brevets

(19)

(11) Veröffentlichungsnummer: **0 221 016 B1**

(12) **EUROPÄISCHE PATENTSCHRIFT**

(45) Veröffentlichungstag der Patentschrift: **02.01.92**

(51) Int. Cl.⁵: **G01C 9/06**, G01C 9/20

(21) Anmeldenummer: **86810437.3**

(22) Anmeldetag: **03.10.86**

Die Akte enthält technische Angaben, die nach dem Eingang der Anmeldung eingereicht wurden und die nicht in dieser Patentschrift enthalten sind.

(54) **Neigungsmessinstrument.**

(30) Priorität: **03.10.85 US 783370**

(43) Veröffentlichungstag der Anmeldung:
**06.05.87 Patentblatt 87/19**

(45) Bekanntmachung des Hinweises auf die Patenterteilung:
**02.01.92 Patentblatt 92/01**

(84) Benannte Vertragsstaaten:
**AT BE CH DE ES FR GB GR IT LI LU NL SE**

(56) Entgegenhaltungen:
**EP-A- 0 035 340**
**EP-A- 0 171 961**
**GB-A- 2 032 110**
**GB-A- 2 112 524**
**GB-A- 2 136 134**

(73) Patentinhaber: **Engler, Max**
**Solothurnerstrasse 187**
**CH-4600 Olten(CH)**

(72) Erfinder: **Engler, Max**
**Solothurnerstrasse 187**
**CH-4600 Olten(CH)**

(74) Vertreter: **White, William et al**
**Patentanwalts-Bureau Isler AG Postfach 6940**
**CH-8023 Zürich(CH)**

**Beschreibung**

Aus der US-A 4 528 760 ist ein Neigungsmessinstrument gemäss Oberbegriff des Anspruchs 1 bekannt. Es handelt sich um ein kapazitives Instrument mit drei Kondensatorplatten an der einen radialen Endwand einer zylindrischen Kammer sowie einer weiteren Kondensatorplatte an der andern Endwand, wodurch mehrere Kondensatoren gebildet werden. Die Kammer ist zur Hälfte mit einer dielektrischen Flüssigkeit gefüllt. Wird das Instrument geneigt, so ändert sich die Kapazität des einen Kondensators relativ zu einem andern. Ueber eine Auswertelektronik kann damit die Neigung an einem Anzeigeinstrument angezeigt werden.

Ein Nachteil dieses Instrumentes ist die geringe Eigendämpfung. Ausserdem sind die Kapazitäten der Kondensatoren wegen des relativ grossen Abstandes der Kondensatorplatten gering, so dass die Messung der Kapazitätsänderungen einen grossen Aufwand erfordert und relativ ungenau wird. Die Aufgabe der vorliegenden Erfindung besteht darin, diese Nachteile zu beheben. Diese Aufgabe wird durch die kennzeichnenden Merkmale des Anspruchs 1 gelöst.

Im Gegensatz zu dem oben erwähnten Vorschlag mit einander gegenüberliegenden Kondensatorplatten wird bei der erfindungsgemässen Lösung die eine Flüssigkeit als Kondensatorplatte verwendet. Die zwischen den Flüssigkeiten und den Kondensatorplatten angeordnete dielektrische Schicht kann sehr dünn gewählt werden, z.B. in der Grössenordnung einiger Mikrometer. Dadurch haben die Kondensatoren im Vergleich zum vorbekannten Instrument eine hohe Kapazität und die Kapazitätsänderungen sind daher mit einfachen Mitteln und mit hoher Präzision feststellbar. Weil die Kammer mit zwei Flüssigkeiten gefüllt ist, ist die Eigenfrequenz geringer und die relative Eigendämpfung sehr hoch. Zwischen den beiden Flüssigkeiten können sich keine Blasen bilden und der Winkel zwischen der dielektrischen Schicht und der Grenzschicht zwischen den beiden Flüssigkeiten hängt nicht von der Richtung ab, aus welcher die Position des Instrumentes erreicht wurde. Das Instrument hat aus diesen Gründen nebst der guten Eigendämpfung eine hohe Genauigkeit und Auflösung sowie eine geringe Hysterese.

Aus der GB-A-2 032 110 ist ein Neigungsmessinstrument bekannt, bei dem in einer Halbkugelkalotte vier Kondensatorplatten angebracht sind. Die Kondensatorplatten sind mit einer festen, dielektrischen Schicht beschichtet. Auf dem Grund der Kalotte liegt Quecksilber, in welches eine Elektrode eintaucht. Das Quecksilber ist damit elektrisch leitend mit einem gemeinsamen, nach aussen geführten Kontakt verbunden. In die Kalotte kann noch eine zweite, spezifisch leichtere, nichtleitende Flüssigkeit eingefüllt werden. Bei diesem Vorschlag treten allerdings Korrosionsprobleme bei der Kontaktfläche zwischen Elektrode und leitender Flüssigkeit auf. Die erfindungsgemässe Lösung gemäss Anspruch 1 vermeidet diesen Nachteil.

Aus der US-A-3 604 275 ist es an sich bekannt, in einem Neigungsmessinstrument mit einer torusförmigen Kammer und zwei Paaren von in die Kammer eingetauchten Widerstand-Drahtelektroden zwei Flüssigkeiten unterschiedlichen spezifischen Gewichts einzufüllen, wobei die eine Flüssigkeit elektrisch leitend ist. Beim Neigen dieses Instrumentes kann aus den unterschiedlichen Widerständen der beiden Elektrodenpaare der Neigungswinkel bestimmt werden.

Ein Ausführungsbeispiel der Erfindung wird nachfolgend anhand der Zeichnung erläutert. Darin zeigt:

Fig. 1     eine Seitenansicht des Instrumentes, teilweise im schnitt,

Fig. 2     einen Längsschnitt durch das Instrument nach Fig. 1, und

Fig. 3     ein Schaltschema der Auswertelektronik des Instrumentes.

Das dargestellte Neigungsmessinstrument umfasst eine zylindrische Kammer 31, die durch eine zylindrische Wand 32 und zwei parallele Endwände 33, 34 gebildet ist, die senkrecht zur Achse der zylindrischen Wand 32 stehen. Die Kammer 31 ist je zur Hälfte mit zwei nicht mischbaren und nicht ineinander löslichen Flüssigkeiten 35, 36 unterschiedlicher Dichte und unterschiedlicher elektrolytischer Eigenschaften gefüllt. Die Flüssigkeiten 35, 36 bilden eine horizontale Grenzschicht 37 zwischen sich. Die Endwand 33 ist mit zwei halbkreisförmigen Kondensatorplatten 38, 39 beschichtet, die vorzugsweise aus einem aufgedampften Goldfilm bestehen. Die Kondensatorplatten 38, 39 schliessen zwischen sich einen schmalen, geradlinigen Spalt 40 ein, der mit einer ebenen Referenzfläche 41 des Instrumentes einen Winkel $\alpha$ von 30 bis 60$^\circ$, vorzugsweise 45$^\circ$ einschliesst. Die zwei Platten 38, 39 sind mit einer festen dielektrischen Schicht 51 z.B. aus PTFE oder einem andern Kunststoff beschichtet. Die beiden Kondensatorplatten 38, 39 sind über Anschlüsse 43, 44 und eine Auswertelektronik mit einem Anzeigeinstrument 46 verbunden, das als Digitalanzeige ausgebildet sein kann. Als Flüssigkeiten 35, 36 eignen sich beispielsweise einerseits Salzwasser oder eine Säure und andererseits Silikonöl.

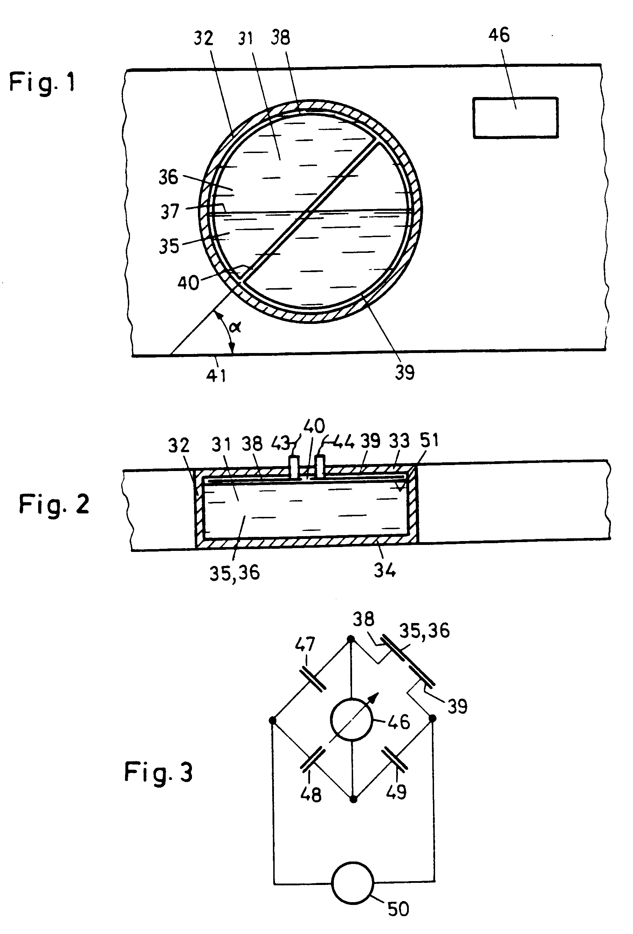

Ein geeigneter Schaltkreis für das Instrument ist in Fig. 3 dargestellt. Es ist eine Brückenschaltung bestehend aus dem variablen Kondensator gebildet durch die Platten 38, 39 und die zwei nicht mischbaren Flüssigkeiten 35, 36 sowie aus drei festen Kondensatoren 47, 48, 49, von denen einer zu Kalibrierzwecken einstellbar sein kann. Eine Speisespannung 50 wird über die eine Diagonale der Brücke angelegt. Das Anzeigeinstrument 46 ist mit der andern Diagonale der Brücke verbunden.

Wenn das Instrument gegenüber der in Fig. 1 dargestellten Lage geneigt wird, bildet die Grenzschicht 37 einen andern Winkel mit dem Spalt 40. Wegen der unterschiedlichen elektrolytischen Eigenschaften der zwei Flüssigkeiten 35, 36 ändert damit die Kapazität des variablen Kondensators 38, 39, 35, 36. Die Ausgangsspannung über die Brückendiagonale ändert damit proportional zum Neigungswinkel und wird am Anzeigeinstrument 46 angezeigt.

Das Instrument hat einen sehr breiten Messbereich von annähernd 180°. Aus diesem Grund ist es möglich, sowohl Abweichungen von der Horizontalen, als auch Abweichungen von der Vertikalen ohne Umstellung des Instrumentes zu messen. Aus diesem Grund beträgt der Winkel zwischen dem Spalt 40 und der Referenzfläche 41 vorzugsweise 45°.

## Patentansprüche

1. Neigungsmessinstrument mit einer zylindrischen Kammer (31) mit zwei parallelen radialen Endwänden (33,34), deren eine mit mindestens zwei Kondensatorplatten (38,39) beschichtet ist, die voneinander durch einen Spalt (40) getrennt sind, wobei die Kammer (31) zur Hälfte mit einer ersten Flüssigkeit (35) gefüllt ist, und mit einem Schaltkreis, dessen Eingänge an die Kondensatorplatten (38,39) und dessen Ausgang an ein Anzeigeinstrument (46) angeschlossen sind, dadurch gekennzeichnet, dass die andere Hälfte der Kammer (31) eine zweite Flüssigkeit (36) enthält, dass die beiden Flüssigkeiten (35, 36) nicht mischbar und nicht ineinander lösbar sind und unterschiedliche elektrolytische Eigenschaften und ein unterschiedliches spezifisches Gewicht aufweisen, dass sämtliche Kondensatorplatten (38, 39) mit einer festen dielektrischen Schicht (51) beschichtet sind, so dass keine elektrisch leitende Verbindung zwischen den Flüssigkeiten (35, 36) und dem Schaltkreis besteht.

2. Instrument nach Anspruch 1, dadurch gekennzeichnet, dass der Spalt (40) zwischen den Kondensatorplatten (38, 39) geradlinig ist und einen Winkel von 30° bis 60° mit einer Referenzfläche (41) des Instrumentes bildet, wobei die Endwände (33,34) senkrecht zur Referenzfläche (41) stehen.

3. Instrument nach Anspruch 1 oder 2, dadurch gekennzeichnet, dass die Kondensatorplatten (38,39) als Metallfilmbeschichtung der einen Endwand (33) ausgebildet sind.

4. Instrument nach einem der Ansprüche 1 bis 3, dadurch gekennzeichnet, dass die Kondensatorplatten (38,39) halbkreisförmig sind.

## Claims

1. An inclinometer or instrument for measuring inclination, with a cylindrical chamber (31) with two parallel radial end walls (33, 34) one of which is coated with at least two capacitor plates (38, 39) separated from each other by a gap (40), the chamber (31) being half-filled with a first fluid (35) and with a circuit the inputs of which are connected to the capacitor plates (38, 39) while its output is connected to an indicating instrument (46), characterised in that the other half of the chamber (31) contains a second fluid (36) and in that the two fluids (35, 36) are not miscible and are not soluble in each other and have different electrolytic properties and a different specific weight and in that all capacitor plates (38, 39) are coated with a solid dielectric coating (51) so that no electrically conductive connection exists between the fluids (35, 36) and the circuit.

2. An instrument according to Claim 1, characterised in that the gap (40) between the capacitor plates (38, 39) is rectilinear and forms an angle of 30 to 60° to a reference surface (41) of the instrument, the end walls (33, 34) being at right-angles to the reference surface (41).

3. An instrument according to Claim 1 or 2, characterised in that the capacitor plates (38, 39) are constructed as a metallic film coating one end wall (33).

4. An instrument according to one of Claims 1 to 3, characterised in that the capacitor plates (38, 39) are semi-circular.

## Revendications

1. Inclinomètre à chambre cylindrique (31) à deux parois d'extrémité parallèles (33, 34), dont l'une est revêtue d'au moins deux armatures de condensateur (38, 39) qui sont séparées l'une de l'autre par une ouverture (40), la chambre (31) étant remplie, pour la moitié, d'un premier liquide (35), et avec un circuit de commuttion dont les entrées sont raccordées aux armatures de condensateur (38, 39) et la sortie à un instrument indicateur (46), caractérisé en ce que l'autre moitié de la chambre (31) contient un liquide (36), que les deux fluides (35, 36) sont non-miscibles et insolubles l'un dans l'autre et présentent des propriétés électrolytiques différentes et un poids spécifique différent, que toutes les armatures de condensateur (38, 39) sont revêtues d'une couche diélectrique fixe (51), de manière qu'il n'y a pas de connexion par conduction électrique entre les fluides (35, 36) et le circuit de commutation.

2. Inclinomètre suivant la revendication 1, caractérisé en ce que l'ouverture (40) entre les armatures de condensateur (38, 39) est rectiligne et forme un angle de 30° à 60° avec la face de référence (41) de l'instrument, les parois d'extrémité (33, 34) étant perpendiculaires à la face de référence (41).

3. Inclinomètre suivant la revendication 1 ou 2, caractérisé en ce que les armatures de condensateur (38, 39) se présentent sous forme de revêtement de film métallique de l'une des parois d'extrémité (33).

4. Inclinomètre suivant l'une des revendications 1 à 3, caractérisé en ce que les armatures de condensateur (38, 39) sont semi-circulaires.

**Fig. 1**

32   31   38                    46

36

37

35

40

α

41                              39

**Fig. 2**

40
32   31   38   43   44   39   33   51

35,36                           34

**Fig. 3**

38   35,36

47

46

48   49

50